(19) Europäisches Patentamt
European Patent Office
Office européen des brevets

(11) **EP 2 331 985 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(51) Int Cl.:
***G01T 3/00*** *(2006.01)*

(21) Anmeldenummer: **09776117.5**

(22) Anmeldetag: **26.08.2009**

(86) Internationale Anmeldenummer:
**PCT/DE2009/001199**

(87) Internationale Veröffentlichungsnummer:
**WO 2010/040330 (15.04.2010 Gazette 2010/15)**

(54) **NEUTRONENDOSIMETER**

NEUTRON DOSIMETER

DOSIMÈTRE DE NEUTRONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.10.2008 DE 102008050731**

(43) Veröffentlichungstag der Anmeldung:
**15.06.2011 Patentblatt 2011/24**

(73) Patentinhaber: **Bundesrepublik Deutschland, vertr. durch das Bundesministerium f. Wirtschaft und Technologie, 38116 Braunschweig (DE)**

(72) Erfinder:
• **LUSZIK-BHADRA, Marlies**
**38116 Braunschweig (DE)**

• **HOHMANN, Eike**
**CH-5200 Brugg (CH)**

(74) Vertreter: **Plöger, Jan Manfred et al Gramm, Lins & Partner GbR Theodor-Heuss-Strasse 1 38122 Braunschweig (DE)**

(56) Entgegenhaltungen:
**US-A- 4 931 649**

• **BROWN, D.; BUCHANAN, R. J.; KOELLE, A.R.: "A microcomputer-based portable radiation survey instrument for measuring pulsed neutron dose rates" HEALTH PHYSICS, Bd. 38, Nr. 4, April 1980 (1980-04), Seiten 507-521, XP8122948 in der Anmeldung erwähnt**

## Beschreibung

Die Erfindung betrifft ein Neutronendosimeter. Gemäß einem zweiten Aspekt betrifft die Erfindung ein Verfahren zum Messen einer Neutronendosis.

Neutronendosimeter werden im Strahlenschutz eingesetzt Es hat sich gezeigt, das herkömmliche Neutronendosimeter, wie in DE 43 44 955 C1 beschrieben, die tatsächliche Dosis bei gepulsten Neutronenfeldern in Folge von Totzeiteffekten unterschätzen, was unerwünscht ist.

Es ist aus der EP 1 903 355 A2 bekannt, dass Neutronen in gepulsten Strahlenfeldern, wie sie an Hochenergie-Beschleunigeranlagen entstehen, dadurch nachgewiesen werden können, dass sie zur Reaktion mit einem $^{12}$C oder $^{9}$Behaltigen Material gebracht werden, das durch die Neutronenbestrahlung aktiviert wird, wobei der aktivierte Kern beispielsweise Beta-Strahlung aussendet und die resultierende Beta-Strahlung detektiert wird. Nachteilig an bestehenden Neutronendosimetern dieser Bauart ist, dass sie Neutronen erst oberhalb einer Energieschwelle nachweisen können, die beispielsweise oberhalb von 1 MeV liegen kann. Andere bekannte Neutronendosimeter, wie in Health Physics 38 (1980), Seite 507-521 beschrieben, weisen Neutronen geringerer Energie über eine Aktivierung von Silber nach, haben aber zudem den Nachteil, dass inhomogene Strahlungsfelder mit begleitender Photonenstrahlung zu bedeutenden Messfehlern führen können und daher beim Wechsel in ein anderes Strahlenfeld jeweils eine Feldkalibrierung durchgeführt werden muss.

Der Erfindung liegt die Aufgabe zugrunde, die Messgenauigkeit bei gepulsten Neutronenfeldern in Gegenwart zumindest von Photonenstrahlung zu verbessern.

Die Erfindung löst das Problem durch ein Neutronendosimeter gemäß Anspruch 1 und ein Verfahren gemäß dem unabhängigen Verfahrensanspruch.

Vorteilhaft an der Erfindung ist, dass die Neutronendosis auch bei gepulsten Neutronenfeldern gut erfassbar ist und nicht unterschätzt wird. Es ist ein weiterer Vorteil, dass auch inhomogene Strahlungsfelder mit einer hohen Messgenauigkeit vermessen werden können. Des Weiteren werden im Wesentlichen nur Neutronen erfasst, wohingegen andere Strahlung ausgeblendet werden kann. So führt ein schwankender Gamma-Strahlungshintergrund nur zu einem geringen Messfehler. Es ist daher nicht notwendig, das Neutronendosimeter am Einsatzort auf das jeweilige Strahlungsfeld zu kalibrieren.

Vorteilhaft ist zudem; dass mit dem erfindungsgemäßen Neutronendosimeter eine kurze Ansprechzeit erreichbar ist. Ein Anstieg der Neutronendosisleistung kann damit schnell erkannt werden. Sofern notwendig, können Personen dann schnell in Sicherheit gebracht werden.

Durch die Auswerteschaltung, die mit den Strahlungsdetektoren verbunden und eingerichtet ist, um von ionisierender Strahlung hervorgerufene elektrische Impulse mit einer Pulshöhe, die unterhalb einer vorgegebenen Pulshöhenschwelle liegt, zu unterdrücken wird die Messgenauigkeit erhöht. Es hat sich nämlich gezeigt, dass - anders als erwartet - etwaige Hintergrundstrahlung, beispielsweise Gamma-Strahlung, zu einer deutlich verschlechterten Messgenauigkeit führen kann.

Im Rahmen der folgenden Beschreibung wird unter einem Neutronenmoderator insbesondere jedes Bauteil verstanden, das aus einem Material besteht, mit dem Neutronen abgebremst (thermalisiert) werden können. Der Neutronenmoderator ist zudem bevorzugt so ausgebildet, dass er eine zumindest im Wesentlichen geschlossene Hülle um die Strahlungsdetektoren bildet. Beispielsweise enthält der Neutronenmoderator eine wasserstoffreiche Verbindung, beispielsweise ein Polyolefin wie Polyehtylen.

Unter einem Strahlungsdetektor wird insbesondere jede Vorrichtung verstanden, die ionisierende Strahlung in elektrische Signale umsetzt. Unter dem Merkmal, dass der jeweilige Strahlungsdetektor in dem Neutronenmoderator angeordnet ist, ist insbesondere zu verstehen, dass er vollständig von dem Neutronenmoderator umgeben ist. Es ist möglich, nicht aber notwendig, dass der Strahlungsdetektor in den Neutronenmoderator eingebettet ist. Beispielsweise kann der Neutronenmoderator als Kugelschale ausgebildet sein, in der die Strahlungsdetektoren angeordnet sind.

Unter dem Merkmal, dass der erste Metallkörper durch Neutronen aktivierbar ist, wird insbesondere verstanden, dass beispielsweise so viel eines Metalls enthalten ist, dass eine Bestrahlung des Metallkörpers mit Neutronen zu einer Kernreaktion führt, aus der mittelbar oder unmittelbar ein radioaktives Isotop hervorgeht. Die Halbwertszeit liegt dabei vorzugsweise insbesondere unter einer Minute. Unter dem Merkmal, dass der zweite Metallkörper durch Neutronen im Wesentlichen nicht-aktivierbar ist; wird insbesondere verstanden, dass die Aktivierungswahrscheinlichkeit für das Material des zweiten Metallkörpers- um Größenordnungen kleiner ist als die Aktivierungswahrscheinlichkeit, des Materials des ersten Metallkörpers, beispielsweise kleiner als ein Tausendstel.

Unter dem Merkmal, dass der erste Metallkörper und der zweite Metallkörper so ausgebildet sind, dass sie im Wesentlichen die gleiche Absorption für Photonen haben, ist insbesondere zu verstehen, dass sie über einen breiten Bereich an Photonenenergie, beispielsweise 1 MeV bis 3 MeV, sich um weniger als 20% in ihrer Absorption unterscheiden. Das kann beispielsweise dadurch erreicht werden, dass die Metallkörper aus Metallen aufgebaut werden, die sich in ihren Kernladungszahlen nur geringfügig unterscheiden.

Gemäß einer bevorzugten Ausführungsform umfasst das Dosimeter einen dritten Strahlungsdetektor, der in dem Neutronenmoderator angeordnet und von einem dritten Metallkörper umgeben ist, der durch Neutronen aktivierbares Material enthält, und einen vierten Strahlungsdetektor, der ebenfalls in dem Neutronenmoderator angeordnet und von einem vierten Metallkörper umgeben ist, der durch Neutronen im Wesentlichen nicht aktivierbar ist, wobei die Strahlungsdetektoren drehsymmetrisch angeordnet sind. Dadurch wird erreicht, dass das Neutronendosimeter inhomogene Strahlungsfelder besonders gut vermessen kann.

Besonders bevorzugt sind die vier Strahlungsdetektoren so angeordnet, dass sie eine Symmetrie, insbesondere eine 180°-Drehsymmetrie, aufweisen. Es ist aber auch möglich, mehr als vier Strahlungsdetektoren vorzusehen.

Als geeignete Strahlungsdetektoren haben sich Halbleiterdetektoren herausgestellt, insbesondere Silizium-Halbleiterdetektoren.

Besonders bevorzugt liegt die- Pulshöhenschwelle bei mehr als 600 keV, beispielsweise bei 660 keV. Dadurch werden von Cs-137 emittierte Quanten effektiv diskriminiert. Damit die Messgenauigkeit nicht leidet, sollte die Pulshöhenschwelle unterhalb von 1 MeV liegen, insbesondere unter 800 keV.

In einer bevorzugten Ausführungsform ist die Auswerteschaltung eingerichtet, um von ionisierender Strahlung hervorgerufene elektrische Impulse mit einer Pulshöhe, die oberhalb einer vorgegebenen Pulshöhenschwelle liegt, zu unterdrücken. Gut geeignet sind Pulshöhenschwelle von höchstens 800 keV. Denkbar ist aber auch, diese obere Pulshöhenschwelle kleiner als 1000 keV oder gar 2000 keV zu wählen. Auf diese Weise wird ein hochenergetischer Hintergrund unterdrückt und die Messgenauigkeit weiter gesteigert.

Ein besonders einfach zu fertigendes und genaues Neutronendosimeter wird erhalten, wenn der Neutronenmoderator kugelschalenförmig ist und die Strahlungsdetektoren in unmittelbarer Nähe zum Kugelmittelpunkt der Kugelschale angeordnet sind. Hierunter ist insbesondere zu verstehen, dass die Strahlungsdetektoren so angeordnet sind, dass der Schwerpunkt dieser Anordnung dicht beim Kugelmittelpunkt liegt, beispielsweise innerhalb des inneren Drittels bezüglich des Radius der Kugel. Besonders geeignete Radien für die Kugel liegen zwischen 10 und 20 cm, insbesondere bei 15 cm.

Erfindungsgemäß umfasst der erste Metallkörper eine Silberfolie. Silber kommt natürlicherweise in den Isotopen $^{109}$Ag und $^{107}$Ag vor, die beide Neutronen unter Aussendung von Gammastrahlung absorbieren und als Betastrahler zu Cadmium zerfallen. Dies geschieht einerseits nach der Gleichung

$$^{109}Ag + n \rightarrow \gamma + ^{110}Ag \rightarrow ^{110}\!Cd + \beta^- \qquad (1),$$

der thermische Wirkungsquerschnitt beträgt 90,5 barn, die Halbwertszeit von 110 Ag ist 25 Sekunden, die maximale Energie der Betastrahlung ist $E_{max}$=2,9 MeV. Die andere Gleichung ist

$$^{107}Ag + n \rightarrow \gamma + ^{108}Ag \rightarrow ^{108}Cd + \beta^- \qquad (2),$$

der Wirkungsquerschnitt ist 38,6 barn, die Halbwertszeit 144 Sekunden, die maximale Energie beim Betazerfall $E_{max}$=1,7 MeV.

Die Dicke der Silberfolie ist bevorzugt so gewählt, dass sie in etwa der mittleren Reichweite der jeweiligen Betastrahlung in Silber entspricht.

Erfindungsgemäß umfasst der zweite Metallkörper eine Zinnfolie. Zinn weist bezüglich der Photonenabsorption eine ähnliche Charakteristik wie Silber auf, ist aber durch Neutronen nur geringfügig (Wirkungsquerschnitt eine mbarn) aktivierbar.

Gemäß einer bevorzugten Ausführungsform umfasst das Neutronendosimeter eine Auswerteeinheit, die eingerichtet ist zum automatischen Durchführen eines Verfahrens mit den Schritten (i) Erfassen von Zählraten der Strahlungsdetektoren und Errechnen der von Beta-Strahlung herrührenden Zählrate aus der Zählrate des ersten Strahlungsdetektors und gegebenenfalls des dritten Strahlungsdetektors einerseits und der Zählrate des zweiten und gegebenenfalls des vierten Strahlungsdetektors andererseits. Sofern mehr als vier Strahlungsdetektoren vorhanden sind, wird die von Betastrahlung herrührende Zählrate entsprechend den aus den Zählraten aller Strahlungsdetektoren errechnet. Da die Absorption für Photonen für beide Metallkörper gleich groß ist, aber nur der erste Metallkörper durch Neutronen aktivierbar ist, kann ein Photonen-Hintergrund herausgerechnet werden. Auf diese Weise kann die Neutronendosis besonders genau gemessen werden. Es sei darauf hingewiesen, dass externe Alpha- und Beta-Strahlung bereits durch den Neutronenmoderator weitgehend abgeschirmt wird.

Insbesondere werden Zählergebnisse unterdrückt, die eine Pulshöhe unterhalb einer vorgegebenen Pulshöhenschwelle von beispielsweise 600 keV, insbesondere 660 keV, haben, um den $^{137}$Cs-Hintergrund zu unterdrücken.

Um besonders hochenergetische Neutronen mit Energien oberhalb von 10 MeV zu erfassen, kann, innerhalb des Moderators eine Zwischenschicht (z.B. Blei) angeordnet werden. In dieser Schicht erzeugen hochenergetische Neutronen durch eine Spallationsreaktion an den Atomkernen mehrere niederenergetische Neutronen, was zu einer Erhöhung des Ansprechvermögens des Detektors im Zentrum des Moderators führt.

Im Folgenden wird die Erfindung anhand eines exemplarischen Ausführungsbeispiels näher erläutert. Dabei zeigt

Figur 1      einen Querschnitt durch ein erfindungsgemäßes Neutronendosimeter,

Figur 2      ein Pulshöhenspektrum, das mit dem Neutronendosimeter gemäß Figur 1 unter Bestrahlung mit einer $^{252}$Cf-Quelle aufgenommen worden ist,

Figur 3      ein Pulshöhenspektrum, das mit einem Silizium-Halbleiterdetektor aus dem Neutronendosimeter gemäß Figur 1 unter Bestrahlung mit $^{137}$Cs, $^{60}$Co und Photonen mit einer Energie zwischen 6 und 7 MeV aufgenommen wurde.

Figur 4      zeigt eine Zählrate bezogen auf 10 Sekunden Messzeit, die mit dem Neutronendosimeter gemäß Figur 1 nach Bestrahlung mit einer $^{252}$Cf-Quelle aufgenommen wurde.

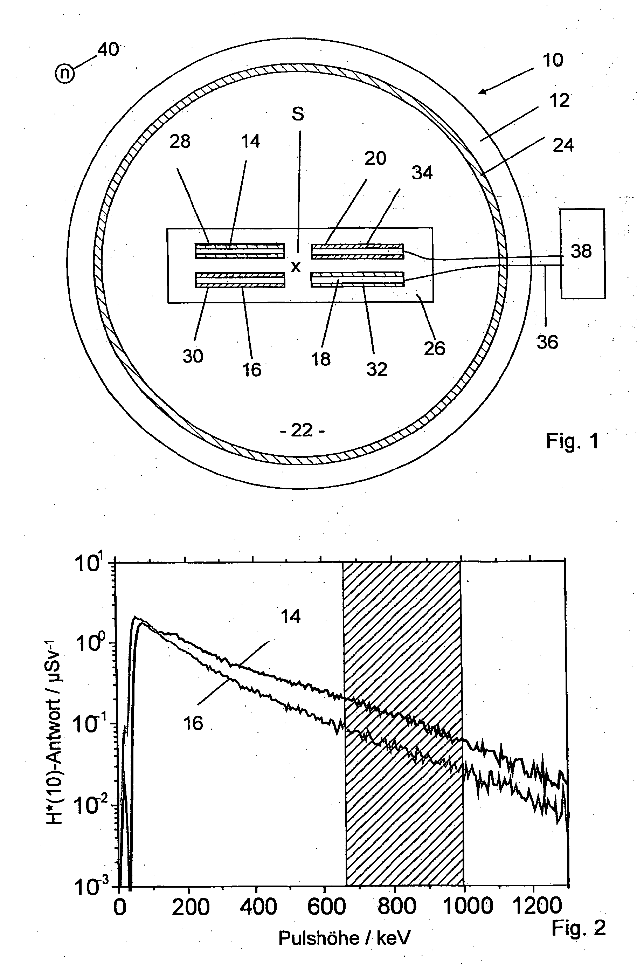

Figur 1 zeigt ein Neutronendosimeter 10 mit einem Neutronenmoderator 12 aus Polyethylen, einem ersten Strahlungsdetektor 14, einem zweiten Strahlungsdetektor 16, einem dritten Strahlungsdetektor 18 und einem vierten Strahlungsdetektor 20.

Alle Strahlungsdetektoren 14, 16, 18, 20 sind Silizium Halbleiterdetektoren, im vorliegenden Fall mit einer Fläche von 8,5 x 10,5 mm$^2$ und einer effektiven Schichtdicke von 0,48 mm (bei Anlegen einer Spannung von 80 V), und im Neutronenmoderator 12 angeordnet und von diesem umgeben. Zwischen dem Neutronenmoderator 12 und einem Aufnahmeraum 22, in dem die Strahlungsdetektoren 14, 16, 18, 20 angeordnet sind, ist eine Kugelhöhle 24 aus Aluminium angeordnet. Der Aufnahmeraum 22 ist mit Luft gefüllt. Der Neutronenmoderator 12 ist eine Polyethylen-Kugelhülle mit einem Außendurchmesser von cirka 30 cm (12").

Die Strahlungsdetektoren 14, 16, 18, 20 sind in Epoxydharz 26 eingebettet und so räumlich relativ zueinander fixiert. Die Anordnung der Strahlungsdetektoren hat einen Schwerpunkt S, der mit einem Kugelschwerpunkt des kugelhüllenförmigen Neutronenmoderators 12 zusammenfällt. Der erste Strahlungsdetektor 14 ist von einem ersten Metallkörper 28 in Form einer Silberfolie mit einer Dicke von 250 $\mu$m umgeben. Der zweite Strahlungsdetektor 16 ist von einem zweiten Metallkörper 30 in Form einer 360 $\mu$m dicken Zinn-Folie umgeben. Auf gleiche Weise ist der dritte Strahlungsdetektor 18 von einem dritten Metallkörper 32 umgeben, der wie der erste Metallkörper 28 aufgebaut ist. Der vierte Strahlungsdetektor 20 ist von einem vierten Teilkörper 34 umgeben, der wie der zweite Metallkörper 30 aufgebaut ist.

Die vier Strahlungsdetektoren 14, 16, 18 und 20 sind über schematisch eingezeichnete Kabel 36 mit einer Auswerteeinheit 38 verbunden.

Fällt ein schematisch eingezeichnetes Neutrum 40 in das Neutronendosimeter 10 ein, so wird es zunächst vom Neutronenmoderator thermalisiert und kommt dann beispielsweise mit dem ersten Metallkörper 28. Es laufen dann die Reaktionen $^{109}Ag+n\rightarrow\gamma+^{110}Ag\rightarrow^{110}Cd+\beta^-$ (1) und (2) $^{107}Ag+n\rightarrow\gamma+^{108}Ag\rightarrow^{108}Cd+\beta^-$ (siehe oben) ab.

Der erste Strahlungsdetektor 14 erfasst dann die Beta-Strahlung, die durch den Zerfall der $^{110}Ag$ und $^{108}Ag$-Isotope emittiert wird und leitet den entsprechenden Zählimpuls an die Auswerteeinheit 38 weiter.

Fällt das Neutron 40 im zweiten Metallkörper 30 ein, so erfolgt keine Aktivierung und das Neutron wird nicht erfasst. Beide Strahlungsdetektoren, 14 und 16 erfassen, jedoch Gamma-Quanten, die sich ebenfalls im Strahlenfeld befinden.

Die Auswerteeinheit 38 erfasst die Zählrate von erstem und drittem Strahlungsdetektor einerseits und zweitem und viertem Strahlungsdetektor andererseits und zieht die Zählraten, gegebenenfalls gewichtet, voneinander ab, so dass diejenige Zählrate erhalten wird, die nur auf die Neutronenaktivierung des Silbers- im Wesentlichen Beta-Strahlung zurückgeht. In anderen Worten wird der Gamma-Hintergrund durch die Auswerteeinheit 38 eliminiert.

Figur 2 zeigt eine Darstellung der Umgebungs-Äquivalentdosis H*(10), gegen die Pulshöhe bei Bestrahlung mit einer $^{252}$Cf-Quelle. Die Definition der Umgebungs-Äquivalentdosis H*(10) kann der ICRP Publication 74, Annals of the ICRP 26, No. 3-4, Pergamon Press, Oxford, 1996 entnommen werden.

Es ist zu erkennen, dass der erste Strahlungsdetektor 14, der mit einer Silberfolie umgeben ist, für die Pulshöhe eine höhere Zählrate liefert als der zweite Strahlungsdetektor 16, der mit einer Zinn-Folie umgeben ist. Die Differenz zwischen den beiden Kurven wird durch die Beta-Strahlung hervorgerufen, die ihrerseits aus der oben dargelegten Kernreaktion resultiert.

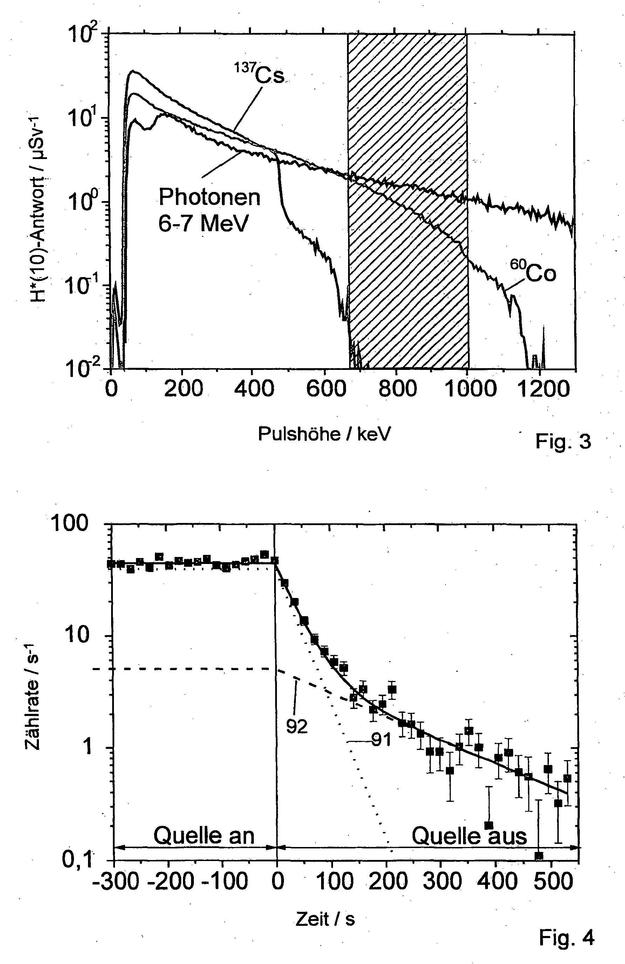

Figur 3 zeigt eine Darstellung der H*(10)-Antwort des ersten Strahlungsdetektors 14 bei Bestrahlung mit reiner Gamma-Strahlung durch die Quellen $^{137}$Cs, $^{60}$Co und Photonen mit einer Energie zwischen 6 und 7 MeV. Es ist zu erkennen, dass Photonen der $^{137}$Cs-Quelle jenseits einer Pulshöhe von cirka 660 keV im Wesentlichen keinen Beitrag mehr zur H*(10)-Antwort liefern. Aus diesem Grund wird bei einer bevorzugten Ausführungsform ein Pulshöhenschwellenwert von 600 keV bis 660 keV gewählt, da so ein starker $^{137}$Cs-Hintergrund diskriminiert werden kann. Der zweite Strahlungsdetektor liefert bei Bestrahlung mit Gamma-Strahlung Pulshöhenspektren, die von denen des Strahlungsdetektors 14 m im Rahmen der Messunsicherheiten nicht unterschieden werden können.

Figur 4 zeigt die mit dem Neutronendosimeter gemäß Figur 1 aufgenommene Zählrate bei Bestrahlung mit einer $^{252}$Cf-Quelle, die zum Zeitpunkt t=0 ausgeschaltet wird. Es ist zu erkennen, dass die Zählrate mit der Zeit abklingt, wobei sich zwei exponentielle Abklingkurven überlagern. Die erste Abklingkurve, die gepunktet mit der Geraden g1 dargestellt ist, gehört zur Halbwertszeit 25 Sekunden und bezieht sich auf den Zerfall $^{110}$Ag. Die mit der Ausgleichsgerade g2 dargestellt Abklingkurve gehört zu der Halbwertszeit 144 Sekunden für den Zerfall von $^{109}$Ag.

Bei einer Bestrahlung mit Neutronen bilden sich $^{110}$Ag und $^{108}$Ag in einem Verhältnis von etwa 2,2:1, das ihrem anteiligen Vorkommen in $^{nat}$Ag (48% und 52%) und dem Verhältnis der Wirkungsquerschnitte der beteiligten Kernreaktionen (90,5:38,6) entspricht. Da die mittlere Energie der Beta-Strahlung des $^{100}$Ag-Isotops jedoch höher ist als die des $^{108}$Ag Isotops, werden bedingt durch die Pulshöhenschwelle bei 660 kev die Beta-Signale des $^{110}$Ag effektiver nachweisen als die des $^{108}$Ag. Aus den-gemessenen Abklingkurven ergibt sich ein Faktor 8. Damit dominieren die Pulse des $^{110}$Ag, was mit einer kurzen Halbwertszeit zerfällt und daher schnell nachweisbare Beta-Strahlung produziert. Auf diese Weise kann schon kurz nach dem Einsetzen der intensiven Neutronenstrahlung diese Neutronenstrahlung nachgewiesen werden. Das erfindungsgemäße Neutronendosimeter hat damit eine sehr kurze Reaktionszeit von wenigen Sekunden.

Die in Figur 1 gezeigte Auswerteeinheit 38 ist ausgebildet, um von den Strahlungsdetektoren 14, 16, 18, 20 Energiepulse zu empfangen, und solche Impulse zu verwerfen, die bei einer Pulshöhe von unterhalb eines Pulshöhenschwellenwerts von 660 keV und von oberhalb eines Pulshöhenschwellenwerts von 1 MeV liegen. Die verbleibenden Impulse des ersten und dritten Strahlungsdetektors 14, 18 einerseits sowie des zweiten und vierten Strahlungsdetektors 16, 20 andererseits werden voneinander subtrahiert. Gegebenenfalls wird eine Gewichtssubtraktion unter Verwendung von während eines Kalibrierprozesses festgelegten Kalibrierparametern durchgeführt.

Aus dieser Differenz wird durch Multiplizieren mit einem ebenfalls durch Kalibrierung gewonnenen Faktor der H*(10)-Messwert ermittelt und über eine nicht eingezeichnete Schnittstelle ausgegeben. Bei dieser Schnittstelle kann es sich beispielsweise um ein Display oder um eine Funkschnittstelle handeln, mit der das Neutronendosimeter 10 die Messwerte an einen zentralen Rechner weiterleitet.

Zum Kalibrieren des Neutronendosimeters 10 wird es mit Quellen benannter Stärke bestrahlt und etwaige Messabweichungen werden durch KorrekturFaktoren kompensiert. In der folgenden Tabelle sind Messwerte angegeben, die die Zählraten für verschiedene Strahlungsarten darstellen.

| Strahlungsquelle | mit Ag-Folie / $\mu Sv^{-1}$ | mit Sn-Folie / $\mu Sv^{-1}$ | Neutronen / $\mu Sv^{-1}$ |
|---|---|---|---|
| $^{60}$Co, 0° | 112.3 ± 0.3 | 113.5 ± 0.3 | -1.2 ± 0.4 |
| $^{60}$Co, 90° rechts | 87.5 ± 03 | 87.2 ± 0.3 | 0.4 ± 0.4 |
| $^{60}$Co, 90° links | 82.6 ± 0.3 | 81.4 ± 0.3 | 1.2 ± 0.4 |
| $^{60}$Co, 90° oben | 100.5 ± 0.3 | 101.3 ± 0.3 | - 0.8 ± 0.4 |
| $^{60}$Co, 90° unten | 103.8 ± 0.3 | 102.5 ± 0.3 | 1.2 ± 0.4 |
|  |  |  |  |
| 6-7 MeV $\gamma$-Str., 0° | 195.6 ± 1.0 | 196.7 ± 1.0 | -1.1 ± 1.4 |
| 6-7 MeV $\gamma$-Str., 90° rechts | 181.3 ± 1.0 | 180.1 ± 1.0 | 1.2 ± 1.3 |
| 6-7 MeV $\gamma$-Str., 90° links | 179.0 ± 1.0 | 177.3 ± 0.9 | 1.6 ± 1.3 |
| 6-7 MeV $\gamma$-Str., 90° oben | 181.0 ± 1.0 | 181.6 ± 1.0 | - 0.7 ± 1.3 |
| 6-7 MeV $\gamma$-Str., 90° unten | 176.6 ± 0.9 | 175.2 ± 0.9 | 1.4 ± 1.3 |
|  |  |  |  |
| Thermische Neutronen | 18.4 ± 0.3. | 12.5 ± 0.3 | 5.9 ± 0.5 |
| 144 keV Neutronen | 10.9 ± 0.2 | 4.3 ± 0.1 | 6.6 ± 0.3 |
| 250 keV Neutronen | 9.3 ± 0.2 | 3.5 ± 0.1 | 5.8 ± 0.2 |

(fortgesetzt)

| Strahlungsquelle | mit Ag-Folie / $\mu Sv^{-1}$ | mit Sn-Folie / $\mu Sv^{-1}$ | Neutronen / $\mu Sv^{-1}$ |
|---|---|---|---|
| 565 keV Neutronen | $8.3 \pm 0.1$ | $2.5 \pm 0.04$ | $5.8 \pm 0.1$ |
| 1,2 MeV Neutronen | $10.1 \pm 0.05$ | $2.2 \pm 0.02$ | $7.9 \pm 0.1$ |
| 2,5 MeV Neutronen | $14.1 \pm 0.04$ | $2.7 \pm 0.02$ | $11.4 \pm 0.1$ |
| 5,0 MeV Neutronen | $14.2 \pm 0.06$ | $3.2 \pm 0.03$ | $11.0 \pm 0.1$ |
| 8,0 MeV Neutronen | $13.3 \pm 0.05$ | $3.4 \pm 0.03$ | $9.9 \pm 0.1$ |
| 14,8 MeV Neutronen | $7.5 \pm 0.04$ | $2.3 \pm 0.02$ | $5.2 \pm 0.1$ |
| | | | |
| $^{252}$Cf (offen) | $14.6 \pm 0.3$ | $5.6 \pm 0.2$ | $9.0 \pm 0.4$ |
| $^{252}$Cf ($D_2O$ moderiert) | $25.0 \pm 0.9$ | $14.7 \pm 051$ | $10.3 \pm 1.2$ |
| $^{241}$Am-Be | $10.3 \pm 0.3$ | $4.1 \pm 0.2$ | $6.2 \pm 0.4$ |

Es ist zu erkennen, dass das Neutronendosimeter im Rahmen der statischen Abweichungen selektiv nur Neutronenstrahlung mit einer hohen Empfindlichkeit von $9,0 \pm 0,4$ Zählereignissen pro $\mu Sv$ (siehe $^{252}$Cf-Quelle) erfasst.

**Bezugszeichenliste**

10      Neutronendosimeter
12      Neutronenmoderator
14      erster Strahlungsdetektor
16      zweiter Strahlungsdetektor
18      dritter Strahlungsdetektor

20      vierter Strahlungsdetektor
22      Aufnahmeraum
24      Kugelhülle
26      Epoxydharz
28      erster Metallkörper

30      zweiter Metallkörper
32      dritter Metallkörper
34      vierter Metallkörper
36      Kabel
38      Auswerteeinheit

S       Schwerpunkt

**Patentansprüche**

1.  Neutronendosimeter mit

    (a) einem Neutronenmoderator (12),
    (b) einem ersten Strahlungsdetektor (14),

        - der in dem Neutronenmoderator (12) angeordnet und
        - von einem ersten Metallkörper (28) umgeben ist, der eine Silberfolie umfasst,

    (c) einem zweiten Strahlungsdetektor (16), der

- in dem Neutronenmoderator (12) in unmittelbarer Nähe des ersten Strahlungsdetektors (14) angeordnet ist und
- von einem zweiten Metallkörper (30) umgeben ist, der eine Zinnfolie umfasst,

(d) wobei der erste Metallkörper (28) und der zweite Metallkörper (30) so ausgebildet sind, dass sie im Wesentlichen die gleiche Absorption für Photonen haben und
(e) einer Auswerteschaltung, die mit den Strahlungsdetektoren verbunden ist, **dadurch gekennzeichnet, dass**
(f) die Auswerteschaltung eingerichtet ist, um von den Strahlungsdetektoren (14,16) Energiepulse zu empfangen und von ionisierender Strahlung hervorgerufene elektrische Impulse mit einer Pulshöhe, die unterhalb einer vorgegebenen Pulshöhenschwelle liegt, zu unterdrücken.

2. Neutronendosimeter nach Anspruch 1, **gekennzeichnet durch**

(f) einen dritten Strahlungsdetektor (18),

- der in dem Neutronenmoderator (12) angeordnet und
- von einem dritte Metallkörper (32) umgeben ist, der **durch** Neutronen aktivierbares Material enthält, und

(g) einen vierten Strahlungsdetektor (20),

- der in dem Neutronenmoderator (12) angeordnet und
- von einem vierten Metallkörper (34) umgeben ist, der **durch** Neutronen im Wesentlichen nicht aktivierbar ist,

(h) wobei die Strahlungsdetektoren symmetrisch, insbesondere drehsymmetrisch angeordnet sind.

3. Neutronendosimeter nach einem der vorstehenden Ansprüche, **dadurch gekennzeichnet, dass** die Pulshöhenschwelle bei mehr als 300 keV, in besondere bei mehr als 600 keV, liegt.

4. Neutronendosimeter nach einem der vorstehenden Ansprüche, **dadurch gekennzeichnet, dass** die Auswerteschaltung eingerichtet ist, um von ionisierender Strahlung hervorgerufene elektrische Impulse mit einer Pulshöhe, die oberhalb einer vorgegebenen, zweiten Pulshöhenschwelle liegt, zu unterdrücken, wobei die zweite Pulshöhenschwelle bei mindestens 800 keV, insbesondere bei mindestens 1000 keV, liegt.

5. Neutronendosimeter nach einem der vorstehenden Ansprüche, **dadurch gekennzeichnet, dass** mindestens einer der Strahlungsdetektoren ein Halbleiterdetektor ist.

6. Neutronendosimeter nach einem der vorstehenden Ansprüche, **gekennzeichnet durch** eine Auswerteeinheit, die eingerichtet ist zum automatischen Durchführen eines Verfahrens mit den Schritten:

(i) Erfassen von Zählraten der Strahlungsdetektoren,
(ii) Errechnen der von Beta-Strahlung herrührenden Zählrate aus der Zählrate des ersten (14) Strahlungsdetektors und gegebenenfalls des dritten Strahlungsdetektors (18) einerseits und der Zählrate des zweiten Strahlungsdetektors 16) und gegebenenfalls des vierten Strahlungsdetektors (20) andererseits.

7. Verfahren zum Messen einer Neutronendosis, mit den folgenden Schritten:

(a) Erfassen von Zählraten mit einem ersten Strahlungsdetektor (14),

- der in einem Neutronenmoderator (12) angeordnet und
- von einem ersten Metallkörper (28) umgeben ist, der eine Silberfolie umfasst,

(b) Erfassen von Zählraten mit einem zweiten Strahlungsdetektor (16),

- der in unmittelbarer Nähe des ersten Strahlungsdetektors (14) in dem Neutronenmoderator (12) angeordnet und
- von einem zweiten Metallkörper (30) umgeben ist, der eine Zinnfölie umfasst,

wobei der erste Metallkörper (28) und der zweite Metallkörper (30) so ausgebildet sind, dass sie im Wesentlichen die gleiche Absorption für Photonen haben, und

(c) Ermitteln der Neutronendosis aus den Zählraten durch

- Errechnen der von Beta-Strahlung herrührenden Zählrate aus der Zählrate des ersten Strahlungsdetektors (14) einerseits und der Zählrate des zweiten Strahlungsdetektors (16) andererseits und
- Errechnen der Neutronendosis aus der von Beta-Strahlung herrührenden Zählrate,

(d) wobei das Erfassen der Zählraten mit dem ersten Strahlungsdetektor (14) und dem zweiten Strahlungsdetektor (16) ein Unterdrücken von Zählereignissen von von den Strahlungsdetektoren (14, 16) empfangenen Energiepulsen unterhalb einer vorgegebenen Pulshöhenschwelle umfasst.

8. Verfahren nach Anspruch 7, **dadurch gekennzeichnet, dass** die Pulshöhenschwelle oberhalb von 600 keV liegt.

**Claims**

1. A neutron dosimeter with

(a) a neutron moderator (12),
(b) a first radiation detector (14),

- being arranged in the neutron moderator (12) and
- being surrounded by a first metal body (28), that comprises a silver foil,

(c) a second radiation detector (16), that is

- arranged in the neutron moderator (12) right next to the first radiation detector (14) and
- is surrounded by a second metal body (30), that comprises a tin foil,

(d) the first metal body (28) and the second metal body (30) being designed so that they fundamentally have the same absorption of photons and
(e) an evaluation circuit, that is connected to the radiation detectors, **characterized by** the fact that
(f) the evaluation circuit is fitted to receive energy pulses from the radiation detectors (14,16) and to suppress electrical impulses caused by ionizing radiation with a pulse height that is below a predefined pulse height threshold.

2. The neutron dosimeter according to claim 1, **characterized by** the fact that

(f) a third radiation detector (18),

- that is arranged in the neutron moderator (12) and
- is surrounded by a third metal body (32) that comprises material that can be activated by neutrons, and

(g) a fourth radiation detector (20),

- that is arranged in the neutron moderator (12) and
- is surrounded by a fourth metal body (34) that cannot fundamentally be activated by neutrons,

(h) the radiation detectors being arranged symmetrically, particularly rotationallysymmetrically.

3. The neutron dosimeter according to one of the above claims, **characterized by** the fact that die pulse height threshold is more than 300 keV, in particular more than 600 keV.

4. The neutron dosimeter according to one of the above claims, **characterized by** the fact that the evaluation circuit is fitted to suppress electrical impulses caused by ionizing radiation with a pulse height that is above a predefined, second pulse height threshold, the second pulse height threshold being at least 800 keV, in particular at least 1000 keV.

5. The neutron dosimeter according to one of the above claims, **characterized by** the fact that at least one of the radiation detectors is a semiconductor detector,

6. The neutron dosimeter according to one of the above claims, **characterized by** an evaluation device that is fitted to automatically carry out a method with the steps:

(i) Detecting the count rates of the radiation detectors,
(ii) Calculating the count rates coming from beta radiation from the count rates of the first radiation detector (14) and possibly from the third radiation detector (18) on one side and the count rate of the second radiation detector (16) and possibly from the fourth radiation detector (20) on the other side.

7. A method for measuring a neutron dose with the following steps:

(a) Detecting the count rates with a first radiation detector (14),

- that is arranged in a neutron moderator (12) and
- is surrounded by a first metal body (28) that comprises a silver foil,

(b) Detecting the count rates with a second radiation detector (16),

- that is arranged right next to the first radiation detector (14) in the neutron moderator (12) and
- is surrounded by a second metal body (30) that comprises a tin foil, the first metal body (28) and the second metal body (30) being designed so that they fundamentally have the same absorption of photons, and

(c) Determining the neutron dose from the count rates by

- calculating the count rates coming from beta radiation from the count rates of the first radiation detectors (14) on the one side and the count rate of the second radiation detector (16) on the other side and
- calculating the neutron dose from the count rates coming from beta radiation,

(d) wherein detecting the count rates with a first radiation detector (14) and the second radiation detector (16) suppresses the counting events, that had been received by the radiation detectors (14,16) below a predetermined pulse height threshold.

8. The method according to claim 7, **characterized by** the fact that the pulse height threshold is above 600 keV.

**Revendications**

1. Dosimètre de neutrons, comprenant

(a) un modérateur de neutrons (12),
(b) un premier détecteur de rayonnement (14),

- qui est agencé dans le modérateur de neutrons, et
- qui est entouré par un premier corps métallique (28) qui inclut une feuille d'argent,

(c) un second détecteur de rayonnement (16),

- qui est agencé dans le modérateur de neutrons (13) au voisinage immédiat du premier détecteur de rayonnement (14), et
- qui est entouré par un second corps métallique (30) qui inclut une feuille d'étain,

(d) dans lequel le premier corps métallique (28) et le second corps métallique (30) sont ainsi réalisés qu'ils présentent sensiblement la même absorption pour les photons, et
(e) un circuit d'évaluation, qui est connecté au détecteur de rayonnement,
**caractérisé en ce que**
(f) le circuit d'évaluation est conçu pour recevoir des impulsions d'énergie depuis les détecteurs de rayonnement (14, 16) et pour inhiber des impulsions électriques provoquées par le rayonnement ionisant et présentant une hauteur d'impulsion qui est située au-dessous d'un seuil de hauteur d'impulsion prédéterminé.

2. Dosimètre de neutrons selon la revendication 1, **caractérisé par**

(f) un troisième détecteur de rayonnement (18),

- qui est agencé dans le modérateur de neutrons (12), et
- qui est entouré par un troisième corps métallique (32) qui contient un matériau capable d'être activé par des neutrons, et

(g) un quatrième détecteur de rayonnement (20),

- qui est agencé dans le modérateur de neutrons (12), et
- qui est entouré par un quatrième corps métallique (34), qui n'est sensiblement pas susceptible d'être activé par des neutrons,

(h) dans lequel les détecteurs de rayonnement sont agencés symétriquement, en particulier selon une symétrie en rotation.

3. Dosimètre de neutrons selon l'une des revendications précédentes, **caractérisé en ce que** le seuil de hauteur d'impulsion est de plus de 300 keV, en particulier plus de 600 keV.

4. Dosimètre de neutrons selon l'une des revendications précédentes, **caractérisé en ce que** le circuit d'évaluation est conçu pour inhiber des impulsions électriques provoquées par le rayonnement ionisant et présentant une hauteur d'impulsion qui est supérieure à un second seuil de hauteur d'impulsion prédéterminé, le second seuil de hauteur d'impulsion étant au moins 800 keV, en particulier au moins 1000 keV.

5. Dosimètre de neutrons selon l'une des revendications précédentes, **caractérisé en ce que** l'un au moins des détecteurs de rayonnement est un détecteur à semi-conducteurs.

6. Dosimètre de neutrons selon l'une des revendications précédentes, **caractérisé par** une unité d'évaluation, qui est conçue pour la mise en oeuvre automatique d'un procédé comprenant les étapes consistant à :

(i) détecter des cadences de comptage des détecteurs de rayonnement,
(ii) calculer des cadences de comptage induites par le rayonnement bêta, à partir des cadences de comptage du premier détecteur de rayonnement (14) et le cas échéant du troisième détecteur de rayonnement (18) d'une part, et des cadences de comptage du second détecteur de rayonnement (16) et le cas échéant du quatrième détecteur de rayonnement (20) d'autre part.

7. Procédé pour mesurer une dose de neutrons, comprenant les étapes suivantes :

(a) détection de cadences de comptage avec un premier détecteur de rayonnement (14),

- qui est agencé dans un modérateur de neutrons (12), et
- qui est entouré par un premier corps métallique (28) qui inclut une feuille d'argent,

(b) détection de cadences de comptage avec un second détecteur de rayonnement (16),

- qui est agencé au voisinage immédiat du premier détecteur de rayonnement (14) dans le modérateur de neutrons (12), et
- qui est entouré par un second corps métallique (30) qui inclut une feuille d'étain,

dans lequel le premier corps métallique (28) et le second corps métallique (30) sont ainsi réalisés qu'ils présentent sensiblement la même absorption pour les photons, et
(c) détermination de la dose de neutrons à partir des cadences de comptage par

- calcul de la cadence de comptage induite par le rayonnement bêta à partir de la cadence de comptage du premier détecteur de rayonnement (14) d'une part et de la cadence de comptage du second détecteur de rayonnement (16) d'autre part, et

- calcul de la dose de neutrons à partir de la cadence de comptage induite par le rayonnement bêta,

(d) dans lequel la détection des cadences de comptage avec le premier détecteur de rayonnement (14) et le second détecteur de rayonnement (16) inclut une inhibition des événements de comptage provenant d'impulsions d'énergie reçues par les détecteurs de rayonnement (14, 16) au-dessous d'un seuil de hauteur d'impulsion prédéterminé.

8. Procédé selon la revendication 7, **caractérisé en ce que** le seuil de hauteur d'impulsion est supérieur à 600 keV.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4344955 C1
- EP 1903355 A2

**In der Beschreibung aufgeführte Nicht-Patentliteratur**

- *Health Physics,* 1980, vol. 38, 507-521
- ICRP. Pergamon Press, 1996, vol. 26